# EUROPÄISCHE PATENTANMELDUNG

(11) **EP 2 036 932 A1**
(43) Veröffentlichungstag der Anmeldung: **18.03.2009**
(21) Anmeldenummer: 07018157.3
(22) Anmeldetag: 15.09.2007
(51) Int. Cl.: C08G 18/28, C08F 214/18, D06M 15/576, D06M 15/277, D06M 15/647

(54) **Zusammensetzungen mit Fluor enthaltendem Polymeren und Siloxan**

(71) Anmelder: Huntsman Textile Effects (Germany) GmbH, 86462 Langweid a. Lech (DE)
(72) Erfinder: Lüdemann, Simpert, 86399 Bobingen (DE); Niederstadt, Rule, 86157 Augsburg (DE); Riedmann, Jürgen, 86157 Augsburg (DE); Wilson, Daniel, 86462 Langwied a. Lech (DE)

(57) **Zusammenfassung**

Erfindungsgemäße Zusammensetzungen enthalten Wasser, ein Perfluoralkylgruppen aufweisendes Polyurethan oder Poly(meth-)acrylat und ein spezielles Siloxan. Die Behandlung von Fasermaterialien, insbesondere von nonwovens aus Polypropylen, führt zu Artikeln, welche öl-, wasser- und alkoholabweisende Eigenschaften besitzen und im medizinischen Bereich eingesetzt werden können.

## Beschreibung

Die Erfindung betrifft Zusammensetzungen, welche Wasser, mindestens ein Polymer mit einer oder mehreren Perfluoralkylgruppen (RF-Gruppen) und mindestens ein Siloxan enthalten. Sie betrifft ferner ein Verfahren zur Behandlung von Fasermaterialien, wobei eine Zusammensetzung der genannten Art auf ein Fasermaterial aufgebracht wird.

Es ist bekannt, Fasermaterialien wie z.B. Gewebe oder gewirkte Materialien oder Vliese (nonwovens) mit Zusammensetzungen zu behandeln, welche Polymere enthalten, die eine oder mehrere Perfluoralkylgruppen (RF-Gruppen) aufweisen. Durch diese Behandlung können den Fasermaterialien ölabweisende Eigenschaften verliehen werden.

Solche Verfahren sind unter anderem beschrieben in der FR-A2213 333, der DE-A 2 702 632 und der EP-A 234 724.

Die WO 2006/071 442 A1 beschreibt "Release-Zusammensetzungen" für "Release-Schichten" und Artikel mit "adhesive"-Eigenschaften. Diese Zusammensetzungen enthalten relativ geringe Mengen eines Fluorpolymeren, nämlich maximal 5 Gew%, und erheblich größere Mengen an fluorfreien Polymeren. Die RF-Gruppen in den Fluorpolymeren sind ausschließlich kurzkettig. Aus der WO 2004/069 919 A2 sind Mischungen bekannt, welche Fluorpolymere und Siloxane enthalten. Die Fluorpolymeren basieren auf PTFE oder PTFE-Copolymeren. Die Siloxane sind Copolymere, welche in der Hauptkette, Polyoxyalkyleneinheiten enthalten, nicht aber in Seitenketten. Der Zweck dieser Siloxane besteht in der Stabilisierung der Fluorpolymer-Zusammensetzungen.

Schließlich sind aus der WO 03/089 712 A1 Zusammensetzungen bekannt, die RF-Gruppen aufweisende Polyurethane und Siloxane enthalten. Die RF-Polyurethane entstehen (siehe Anspruch 1) durch Reaktion von Isocyanaten mit mindestens 3 NCO-Gruppen mit monofunktionellen Verbindungen, welche eine RF-Gruppe enthalten. Die Zusammensetzungen müssen ferner Copolymere der Art RF-(Meth-)acrylat/Polyoxyalkylen(meth-)acrylat enthalten; letztere besitzen die Funktion fluorhaltiger Tenside. Die Zusammensetzungen dieser WO dienen in erster Linie der Ausrüstung von Teppichen, um diesen öl-/wasserabweisende Eigenschaften zu verleihen.

In Beispiel 3 dieser WO ist eine Zusammensetzung genannt, welche außer Fluorpolymer noch eine größere Menge Siloxan enthält. Das Gewichtsverhältnis von Fluorpolymer zu Siloxan beträgt etwa 100 : 57. Der Zweck der Zugabe von Siloxan liegt gemäß den Angaben dieser Schrift in einer "Extenderwirkung", nämlich in einem teilweisen Ersatz des teueren RF-Polymeren durch das kostengünstigere Siloxan.

Für Artikel aus Vliesen (nonwovens), aus Polyolefinen, insbesondere aus Polypropylen-SMS-Vliesen (spunbond-meltblown-spunbond), die im medizinischen Bereich eingesetzt werden sollen, bestehen eine Reihe von strengen Anforderungen. So müssen die ausgerüsteten nonwovens öl- und wasserabweisende Eigenschaften besitzen, sie müssen ferner im sogenannten "EDANA-Test", der unten beschrieben wird, mindestens die Note 9, besser noch die Note 10, erhalten und zwar in Bezug auf die Abweisung von Isopropanol. Diese nonwovens müssen also Isopropanol praktisch quantitativ abweisen, d.h. sie dürfen von Isopropanol nicht oder nur zu einem unwesentlichen Ausmaß benetzt werden, müssen also eine Barriere gegen lösemittelhaltige Substanzen aufweisen.

Eine weitere Forderung, die an die genannten Polypropylen-nonwovens gestellt wird, besteht darin, dass bei dem sogenannten "Wassersäulentest", der ebenfalls unten beschrieben wird, die Höhe der Wassersäule bei den mit Polymerzusammensetzungen behandelten nonwovens einen Wert von mindestens 60 % der ursprünglichen Höhe, d.h. der Höhe vor der Behandlung, besitzen muß.

Es hat sich gezeigt, dass mit Zusammensetzungen, die aus dem Stand der Technik bekannt sind und die Fluorpolymere enthalten, die genannten Anforderungen nicht oder nicht ausreichend erfüllt werden, denn entweder ist der abweisende Effekt gegenüber Isopropanol ungenügend, oder der gegenüber Wasser.

Wenn Zusammensetzungen Polymere mit RF-Gruppen aber keine relativ kurzkettigen Siloxane, enthalten, ist die Isopropanol-Abweisung von behandelten Polypropylen-nonwovens ungenügend. Ist in den Zusammensetzungen eine zu große Menge Siloxan enthalten, so werden die Anforderungen des "Wassersäulentests" nicht erfüllt. Letzteres trifft beispielsweise auf die Rezeptur gemäß Beispiel 3 der WO 03/089 712 A1 zu.

Die Aufgabe der vorliegenden Erfindung bestand darin, Zusammensetzungen zur Verfügung zu stellen, mit welchen sich nonwovens aus Polyolefinen, insbesondere aus Polypropylen, behandeln lassen und wobei diese nonwovens nach der Behandlung hervorragende Ergebnisse bezüglich Abweisung von Isopropanol (gemäß "EDANA-Test") und bezüglich Eindringens von Wasser (gemäß "Wassersäulentest") aufweisen. Ferner bestand eine Aufgabe der Erfindung darin, ein Verfahren zur Behandlung von Fasermaterialien, insbesondere von nonwovens aus Polypropylen, zur Verfügung zu stellen, mit dem Artikel erhalten werden können, welche im "EDANA-Test" (Abweisung von Isopropanol) und im "Wassersäulentest" (Eindringen von Wasser in das Fasermaterial) hervorragende Ergebnisse liefern.

Die Aufgabe wurde gelöst durch eine Zusammensetzung, welche Wasser und mindestens eine Komponente A und mindestens eine Komponente B enthält,
wobei Komponente A entweder ein Polyurethan ist, das sich erhalten lässt durch Umsetzung eines zweiwertigen Isocyanats mit einem zweiwertigen Alkohol, welcher mindestens eine Perfluoralkylgruppe RF der Formel (1) 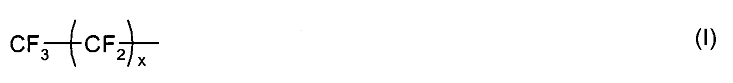 enthält, worin x eine Zahl von 5 bis 23, vorzugsweise von 7 bis 19 ist, wobei weder das zweiwertige Isocyanat noch der zweiwertige Alkohol Polyoxyalkylengruppen enthält, oder wobei Komponente A ein polymerer (Meth-)Acrylsäureester der Formel (11) ist, 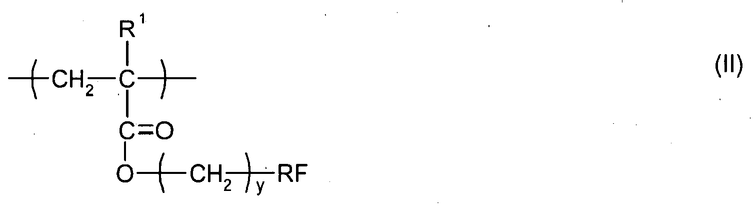 worin RF die oben genannte Bedeutung besitzt, R¹ für H oder CH₃ steht und y eine Zahl von 2 bis 4 ist, oder wobei Komponente A ein Gemisch ist, das eines oder mehrere der genannten Polyurethane und/oder einen oder mehrere der genannten (Meth-)Acrylsäureester enthält, wobei Komponente B ein Siloxan der Formel (III) oder ein Gemisch solcher Siloxane ist 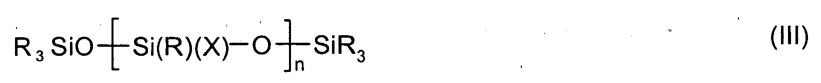 wobei alle Reste R unabhängig voneinander für CH₃-, CH₃CH₂- oder CₑH₅- stehen, n eine Zahl von 1 bis 5 ist,
alle Reste X unabhängig voneinander für R oder einen Rest der Formel (IV) stehen 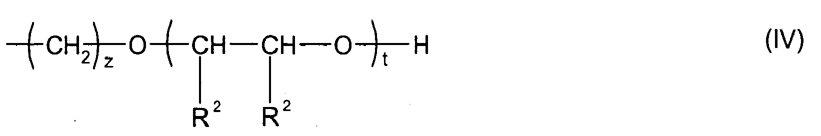 wobei jedoch mindestens einer aller Reste X für einen Rest der Formel (IV) steht, wobei in jeder der Einheiten 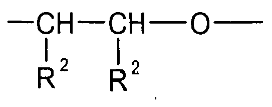 einer der Reste R² für Wasserstoff und der andere für Wasserstoff oder eine Methylgruppe
steht, wobei z eine Zahl von 2 bis 4 ist und vorzugsweise den Wert 3 besitzt,
wobei t eine Zahl von 2 bis 12 ist, vorzugsweise eine Zahl von 6 bis 12,
wobei die Zusammensetzung 10 bis 70 Gew% an Komponente A enthält,
wobei das Gewichtsverhältnis von Komponente A zu Komponente B in der Zusammensetzung im Bereich von 100 : 5 bis 100 : 35 liegt, vorzugsweise im Bereich von 100 : 13 bis 100 : 25, sowie durch ein Verfahren zur Behandlung von Fasermaterialien, wobei man auf die Fasermaterialien eine Zusammensetzung der genannten Art aufbringt.

Ein besonderer Vorteil erfindungsgemäßer Zusammensetzungen besteht darin, dass sie auf nonwovens aus Polypropylen aufgebracht werden können, ohne dass die Oberfläche des Polypropylens vorher chemisch modifiziert werden muß, wie es bei vielen bekannten Verfahren der Fall ist.

Die erfindungsgemäßen Zusammensetzungen sind sehr gut dazu geeignet, auf Fasermaterialien aufgebracht zu werden und hierbei Fasermaterialien zu erhalten, welche gute alkohol-, öl-und wasserabweisende Eigenschaften besitzen. Als Fasermaterialien können textile Flächengebilde in Form von Geweben, Wirkware oder Vliesen (nonwovens) verwendet werden. Sie können aus natürlichen oder synthetischen Fasern und Mischungen solcher Fasern bestehen. Besonders gut geeignet sind erfindungsgemäße Zusammensetzungen für die Behandlung von nonwovens, wobei eine besonders bevorzugte Ausführungsform darin besteht, erfindungsgemäße Zusammensetzungen auf nonwovens aufzubringen, die vollständig oder überwiegend, d.h. zu 80 bis 100 Gew% aus Polyolefin, insbesondere aus Polypropylen, bestehen. Auf diese Weise gelingt es, nonwovens aus Polypropylenfasern herzustellen, die sich hervorragend für den Einsatz im medizinischen Sektor eignen und die, dort gestellten strengen Anforderungen erfüllen. Diese Anforderungen bestehen zum einen darin, dass die nonwovens bei der Prüfung gemäß dem sogenannten "EDANA-Test" der nachfolgend erläutert wird, mindestens die Note 9, vorzugsweise aber die Note 10 erhalten müssen, was die Abweisung von Isopropanol betrifft.

Zum anderen muß bei dem sogenannten "Wassersäulentest" die Wassersäule, die sich bei den mit erfindungsgemäßen Zusammensetzungen behandelten nonwovens nach deren Trocknung ergibt, mindestens 60 % der Höhe betragen, welche die Wassersäule an den unbehandelten Proben aufwies.

Die beiden genannten Testmethoden werden nunmehr erläutert.

### 1. EDANA-Test

Dieser Test liefert eine Aussage darüber, welche alkoholabweisenden Eigenschaften Flächengebilde aus Fasermaterialien gegenüber niedrigmolekularen Alkoholen besitzen. Hinsichtlich der Abweisung von Isopropanol wird der Test durchgeführt, wie er in dem Papier "Standard Test: WSP 80.8 (05), Standard Test Method for Alcohol Repellency of Nonwoven Fabrics", Ausgabe 2005, der "European Disposables and Nonwovens Association" beschrieben ist. Die Beschreibung dieser Testmethode ist enthalten in "World Wide Strategic Partner: Standard Test Methods for Nonwovens Industry. Author: INDA and EDANA". Als Testlösungen wurden Gemische aus Isopropanol/Wasser mit unterschiedlichen Mischungsverhältnissen verwendet. Das Ergebnis des Tests wird in Noten von 0 bis 10 ausgedrückt, wobei höhere Noten effektivere Abweisung von Isopropanol bedeuten.

### 2. Wassersäulentest

Der Test gibt Informationen über hydrophile Eigenschaften von Substraten. Er wurde in Anlehnung an die DIN ISO 811 (EN 20811), Ausgabe August 1992, durchgeführt. Gemessen wird der Widerstand von Textilien gegen das Durchdringen von Wasser über Ermittlung der hydrostatischen Druckhöhe (Höhe der Wassersäule), der ein textiles Flächengebilde standhält. Je höher die Wassersäule, bei der erstmals Durchdringen durch das Textil erfolgt, desto weniger hydrophil ist das Substrat.

Es wurde gefunden, dass die Behandlung von nonwovens aus Polypropylen mit RF-Polymeren allein, d.h. ohne Mitverwendung von Siloxanen der Formel (III) eine ungenügende Abweisung von Isopropanol ergibt. Dieser Befund ist besonders überraschend, denn es war nicht zu erwarten, dass das relativ unpolare RF-Polymer eine geringere Abweisung gegen Isopropanol zeigt als seine Kombination mit dem hydrophilen Siloxan.

Es hat sich gezeigt, dass hinsichtlich der Verwendung als Komponente B eine sorgfältige Auswahl von Siloxanen zu erfolgen hat und dass ferner das Mischungsverhältnis von Komponente A zu Komponente B in erfindungsgemäßen Zusammensetzungen in einem engen Bereich liegen muß. Andernfalls lassen sich die strengen Anforderungen bezüglich "EDANA-Test" und "Wassersäulentest" nicht erfüllen.

Vielfach ist es erwünscht oder sogar erforderlich, wenn die mit erfindungsgemäßen Zusammensetzungen behandelten Fasermaterialien zusätzlich antielektrostatische Eigenschaften besitzen. Dies lässt sich erreichen, indem man außer erfindungsgemäßen Zusammensetzungen noch zusätzlich ein Antistatikum oder ein Gemisch von Antistatika auf die Fasermaterialien aufbringt. Geeignete antielektrostatisch wirksame Produkte sind dem Fachmann bekannt und auf dem Markt erhältlich. In Frage kommen unter anderem Produkte auf Basis üblicher, bekannter organischer Phosphorverbindungen (z. B. Phosphorsäureester).

Im Fall der unten beschriebenen bevorzugten Ausführungsform des erfindungsgemäßen Verfahrens, bei dem eine erfindungsgemäße Zusammensetzung in Form eines Schaums auf ein Fasermaterial aufgebracht wird, lässt sich ein Antielektrostatikum mit der Zusammensetzung vermischen, bevor ein Verschäumen erfolgt. Die erforderliche Menge an Antistatikum hängt von den speziellen Gegebenheiten ab und lässt sich leicht durch wenige Versuche ermitteln. Erfindungsgemäße Zusammensetzungen müssen Wasser und mindestens eine Komponente A und eine Komponente B enthalten. Daneben können auch noch weitere Bestandteile anwesend sein.

Als Komponente A kann ein einzelnes Polymer oder ein Gemisch von Polymeren verwendet werden, von denen jedes der nachfolgenden Beschreibung entspricht.

Komponente A ist ein Polymeres, welches mindestens eine Perfluoralkylgruppe enthält, letztere wird nachfolgend auch als RF-Gruppe bezeichnet. Das Polymer kann auch mehrere Gruppen RF enthalten. RF ist hierbei ein Rest der Formel (I).

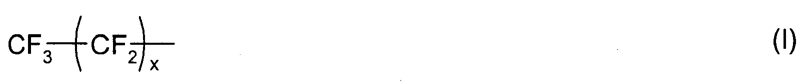

In dieser Formel bedeutet x eine Zahl von 5 bis 23, vorzugsweise besitzt x einen Wert im Bereich von 7 bis 19. Diese Werte sind Durchschnittswerte, denn wegen der Molekulargewichtsverteilung bei Polymersynthesen können individuelle Werte von x voneinander abweichen, wenn der durchschnittliche Wert von x kleiner als 5 ist, ist die Ölabweisung der ausgerüsteten Materialien ungenügend, ebenso die Abweisung gegenüber Isopropanol
Die Polymeren mit RF-Gruppen, die als Komponente A geeignet sind, sind Polyurethane oder Poly(meth-)acrylatester. Im Fall dieser (Meth-)Acrylate weist die Alkoholkomponente am Kettenende einen Rest RF auf, es handelt sich also um Verbindungen der Formel (II) 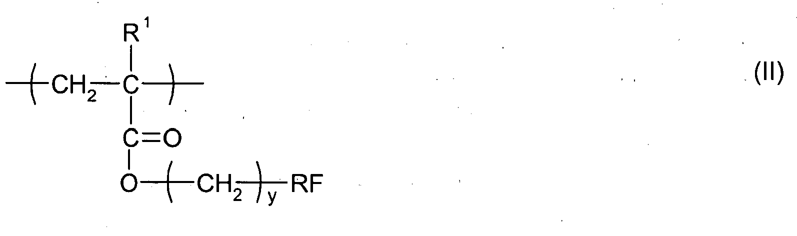 worin y eine Zahl von 2 bis 4 ist und R¹ für Wasserstoff oder die Methylgruppe steht. RF besitzt die oben genannte Bedeutung.

Gut geeignet als Komponente A sind außer (Meth-)acrylaten ferner Polyurethane mit Gruppen RF, welche sich durch Umsetzung von zweiwertigen Isocyanaten mit zweiwertigen Alkoholen erhalten lassen.

Als Komponente A geeignete Polymere sind dem Fachmann bekannt und auf dem Markt erhältlich, z.B. von der Firma Du Pont. Geeignete Produkte und deren Herstellung gehen ferner aus der Literatur hervor, z.B. aus den Schriften EP-A 1 088 929, US-A 3 491 169, US-A 3 818 074, US-A5 214 121, EP-A 348 350, US-A 3 968 066 und US-A 4 054 592.

Als Komponente A geeignet sind aus der Gruppe der Polyurethane nur solche Polyurethane, welche sich durch Umsetzung von zweiwertigen Isocyanaten mit zweiwertigen Alkoholen erhalten lassen, wobei jeder verwendete zweiwertige Alkohol mindestens eine RF-Gruppe enthält. Enthalten die als Ausgangsverbindungen verwendeten Isocyanate mehr oder weniger als zwei NCO-Gruppen und/oder die verwendeten Alkohole mehr oder weniger als 2 OH-Gruppen, so entstehen keine als Komponente A geeigneten Polymere.

Ferner dürfen weder die als Ausgangsverbindungen verwendeten zweiwertigen Isocyanate noch die als Ausgangsverbindungen verwendeten zweiwertigen Alkohole Polyoxyalkylengruppen enthalten. Sie sind also insbesondere frei von Polyoxyethyleneinheiten. Auch die (Meth-) Acrylatester, welche als Komponente A verwendet werden können, müssen frei von Polyoxyalkyleneinheiten sein. Es hat sich nämlich gezeigt, dass die mit erfindungsgemäßen Zusammensetzungen behandelten Fasermaterialien ungenügende wasserabweisende Eigenschaften gemäß "Wassersäulentest" aufweisen würden, wenn Komponente A Polyoxyalkylengruppen enthält.

Auch alle übrigen in erfindungsgemäßen Zusammensetzungen anwesenden Produkte sind vorzugsweise frei von Polyoxyalkylengruppen, mit Ausnahme eines gewissen Gehalts von Polyoxyalkyleneinheiten in Komponente B und gegebenenfalls in einem Dispergator. Es können in erfindungsgemäßen Zusammensetzungen neben den Komponenten A und B zusätzlich noch weitere Komponenten anwesend sein, z.B. fluorfreie Polymere, Flammschutzmittel, Dispergatoren oder Dispergatorgemische. Alle diese zusätzlich verwendeten Produkte mit Ausnahme von Dispergatoren sind vorzugsweise frei von Polyoxyethylengruppen und auch der aus Dispergatoren stammende Anteil an Polyoxyethyleneinheiten sollte in erfindungsgemäßen Zusammensetzungen nur so hoch wie unbedingt erforderlich sind.

Falls polymere (Meth-)Acrylatester als Komponente A verwendet werden sollen, so lassen sich diese nach bekannten Methoden herstellen durch Umsetzung von (Meth-)Acrylsäure oder Derivaten davon mit Monoalkoholen, welche an einem Kettenende eine RF-Gruppe der genannten Art aufweisen, und anschließend radikalische Polymerisation unter Verwendung eines üblichen Radikalinitiators.

Gut geeignet als Monoalkohole sind für die genannte Umsetzung Verbindungen der Formel 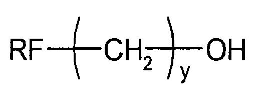 worin RF die oben genannte Bedeutung besitzt und y eine Zahl von 2 bis 4 ist.

Bei der Umsetzung der (Meth-)Acrylsäure oder deren Derivat mit Monoalkohol und anschließender Polymerisation entstehen also Polymere der Formel (II).

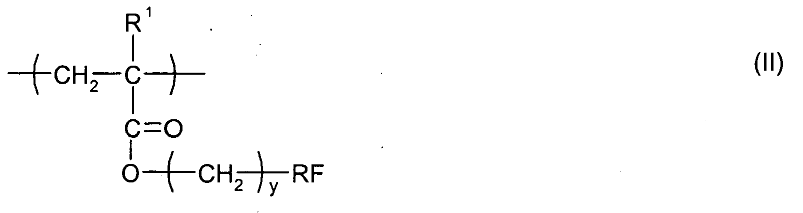

Diese sind als Komponente A geeignet.

Komponente A muß nicht ein einheitliches Polymer sein. Vielmehr können auch Gemische verwendet werden, welche ein oder mehrere Polyurethane und/oder ein oder mehrere Polyacrylate der genannten Arten enthalten.

Komponente B erfindungsgemäßer Zusammensetzungen ist ein Siloxan der Formel (III) oder ein Gemisch solcher Siloxane.

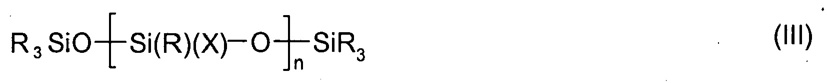

In dieser Formel (III) stehen alle Reste R unabhängig voneinander für eine Methyl- oder Ethyl-oder Phenylgruppe. Vorzugsweise sind 80 bis 100 % aller anwesenden Reste R Methylgruppen.

In Formel (III) besitzt n einen Wert von 1 bis 5. Besonders gut geeignet sind Siloxane, bei denen n = 1 ist. Wenn n größere Werte als 5 annimmt, liegen keine als Komponente B geeigneten Siloxane vor.

Alle Reste X in Formel (III) stehen unabhängig voneinander für einen Rest R der genannten Art oder für einen Rest der Formel (IV).

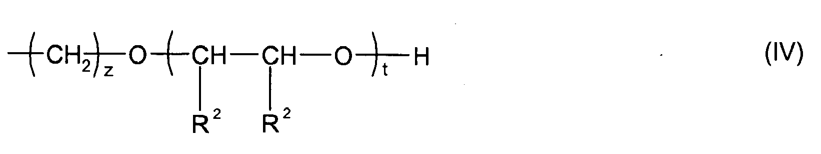

Mindestens einer aller anwesenden Reste X muß jedoch für einen Rest der Formel (IV) stehen. In Formel (IV) ist z eine Zahl von 2 bis 4, t ist eine Zahl von 2 bis 12, vorzugsweise von 6 bis 12. In jeder Einheit 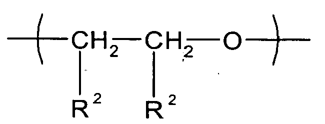 von Formel (IV) steht einer der Reste R² für H und der andere für H oder CH₃.

In einer besonders bevorzugten Ausführungsform erfindungsgemäßer Zusammensetzungen ist Komponente B eine Verbindung der Formel (V) 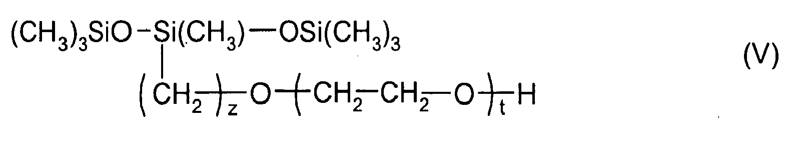 oder ein Gemisch solcher Verbindungen.

Siloxane der Formel (III) und (V) sind auf dem Markt erhältlich und können nach Methoden hergestellt werden, wie sie dem Fachmann auf dem Gebiet der Silikonchemie bekannt sind. Siloxane der Formel (V) können von den Firmen Wacker Chemie oder Degussa bezogen werden.

Um die Vorteile erfindungsgemäßer Zusammensetzungen bei der Behandlung von nonwovens aus Polyolefinen zu erzielen, muß auf die Einhaltung bestimmter Mengenbereiche für Wasser und die Komponenten A und B geachtet werden. Die Zusammensetzungen müssen 10 bis 70 Gew% an Komponente A enthalten. Ferner muß das Gewichtsverhältnis von Komponente A zu Komponente B im Bereich von 100 : 5 bis 100 : 35 liegen. Besonders bevorzugt ist hierbei ein Bereich von 100 : 13 bis 100: 25.

Was die relativen Anteile der einzelnen lnhaltsstoffe erfindungsgemäßer Zusammensetzungen betrifft, so können diese in gewissen Bereichen schwanken. Gut geeignet sind z.B. Zusammensetzungen, die einen Gehalt an Fluor (berechnet als Element F) im Bereich von 3,5 bis 6,5 Gew% aufweisen und in denen das Gewichtsverhältnis von Wasser zu Komponente A im Bereich von 1,3 : 1 bis 2 : 1 liegt. Zusammensetzungen von dieser Art lassen sich bequem herstellen, und gut lagern. Für die Verwendung bei der Behandlung von nonwovens aus Polypropylen ist es vorteilhaft, diese genannten Zusammensetzungen weiter mit Wasser zu verdünnen. Eine besonders bevorzugte Ausführungsform erfindungsgemäßer Zusammensetzungen besteht deshalb darin, dass sie Wasser und Komponente A im Gewichtsverhältnis von 4 : 1 bis 6 : 1 enthält. Zusammensetzungen dieser Art lassen sich gut mechanisch verschäumen und als Schaum auf Fasermaterialien applizieren, was eine bevorzugte Methode für die Applikation erfindungsgemäßer Zusammensetzungen darstellt.

Erfindungsgemäße Zusammensetzungen können in einfacher Weise hergestellt werden durch Vermischen von Wasser, Komponente A und Komponente B bei Raumtemperatur oder gegebenenfalls etwas erhöhter Temperatur. Gegebenenfalls wird hierbei ein Dispergator oder ein Gemisch von Dispergatoren mitverwendet. Als Dispergatoren geeignet sind handelsübliche, oberflächenaktive Produkte. Gegebenenfalls werden den Zusammensetzungen weitere Produkte zugegeben wie z.B. Antistatika, Flammschutzmittel usw.

Das Vermischen der einzelnen Bestandteile erfolgt normalerweise unter Anwendung eines mechanischen Rührvorgangs, gegebenenfalls kann sich eine Hochdruckemulgierung anschließen. Vielfach ist es, bei Auswahl geeigneter Mengenverhältnisse der einzelnen Komponenten, möglich, erfindungsgemäße Zusammensetzungen zu verschäumen und in Form so erhaltener Schäume auf die Fasermaterialien zu applizieren. Diese Applikationsmethode ist bevorzugt. Auf diese Weise ist es möglich, relativ geringe Mengen Wasser auf die Fasermaterialien zu applizieren. Der Vorteil gegenüber herkömmlichen Badapplikationen liegt unter anderem darin, dass anschließend weniger Zeit und Energie erforderlich ist, um das Wasser wieder von den Fasermaterialien zu entfernen. Es lassen sich deshalb hohe Verarbeitungsgeschwindigkeiten erzielen.

Das erwähnte Verschäumen kann ohne zusätzliche Verwendung eines schaumbildenden Mittels durch mechanische Bewegung unter Luftzutritt erfolgen, und es eignen sich hierfür bekannte Vorrichtungen. So lassen sich Schäume mit einem Gewicht z.B. von 20 bis 100 g/l erhalten. Die Applikation des Schaums auf das Fasermaterial, z.B. auf das nonwoven, kann unter Verwendung herkömmlicher Schaumapplikatoren bei Raumtemperatur erfolgen.

Nach der Behandlung mit erfindungsgemäßen Zusammensetzungen werden die Fasermaterialien in bekannter Weise getrocknet, z.B. bei einer Temperatur im Bereich von 80 bis 120°C. Daran anschließend kann eine Kondensation bei weiter erhöhter Temperatur durchgeführt werden, z.B. einer Temperatur im Bereich von 120 bis 140°C. Vorzugsweise kann die Trocknung und Kondensation in einem Durchgang vollzogen werden, um dadurch die Produktivität zu erhöhen und Energie zu sparen. Bei hohen Warengeschwindigkeiten und optimalen Trocknungs-/ Kondensationsbedingungen kann die Zeit ggf. nur wenige Sekunden betragen.

Neben der erwähnten Verwendung von nonwovens im medizinischen Bereich können mit erfindungsgemäßen Zusammensetzungen behandelte Fasermaterialien auch noch in anderen Bereichen Verwendung finden, z.B. in Geo-Textilien, Markisen oder Abdeckungen.

Die Erfindung wird nunmehr durch ein Ausführungsbeispiel veranschaulicht.

Auf je eine Probe eines Polypropylen-SMS-Vlieses mit einem Flächengewicht von 60 g/m² wurde je eine der drei folgenden Rezepturen appliziert.

Rezeptur 1 (nicht-erfindungsgemäß):
350 g/l einer handelsüblichen Polyacrylatdispersion (entsprechend Komponente A von Anspruch 1)
1 g/l eines handelsüblichen Verschäumers

Rezeptur 1 enthielt also keine Komponente B. Die Polyacrylatdispersion (Komponente A) war eine wäßrige Dispersion, welche etwa 20 Gew.-% eines Polyacrylats mit RF-Gruppen enthielt. Rezeptur 2 (erfindungsgemäß):
350 g/l der gleichen Polyacrylatdispersion wie in Rezeptur 1
10 g/l eines Siloxans der oben angegebenen Formel (III) (Komponente B)

Rezeptur 3 (nicht-erfindungsgemäß):
350 g/l der gleichen Polyacrylatdispersion wie in Rezeptur 1
10 g/l eines langkettigen Polysiloxans mit wesentlich mehr als 10 Polyoxyethyleneinheiten in einer Seitenkette. Dieses Polysiloxan fällt nicht unter die in Anspruch 1 gegebene Definition von Komponente B.

Alle 3 Rezepturen wurden mittels einer Verschäumungsapparatur in je einen Schaum mit einem Gewicht von 60 g/l überführt. Nur im Fall von Rezeptur 1 war hierzu der Zusatz eines Verschäumers erforderlich.

Die 3 Schäume wurden anschließend auf je eine Probe des Polypropylen-Vlieses in einer solchen Menge appliziert, daß das Vlies nach Trocknung ein um 20 % höheres Gewicht besaß als das unbehandelte Vlies.

Nach Applikation der drei Schaumrezepturen wurden die behandelten Vliese bei 120°C eine Minute lang getrocknet. Anschließend wurden jeweils die Alkohol-Abweisung (Isopropanol) gemäß EDANA-Test ermittelt und der Wassersäulen-Test durchgeführt. Die Ergebnisse zeigt folgende Tabelle:

| Rezeptur-Nr. | EDANA-Test, Note | Wassersäule Höhe |
|---|---|---|
| Vergleich: unbehandeltes Vlies | 2 | 700 mm |
| 1 | 5 | 300 mm |
| 2 | 10 | 550 mm |
| 3 | 5 | 300 mm |

Es ist offensichtlich, daß das mit der erfindungsgemäßen Rezeptur 2 behandelte Vlies den Vliesen überlegen ist, welche mit Rezeptur 1 bzw. 3 behandelt wurden. Nicht nur die abweisende Wirkung gegenüber Isopropanol ist bei mit Rezeptur 2 behandeltem Vlies deutlich besser (Note 10 gegenüber 5), sondern das mit Rezeptur 2 behandelte Vlies erfüllt als einziges die Forderung, daß die Höhe der Wassersäule mindestens 60 % des Wertes aufweisen soll, den die unbehandelte Vliesprobe beim Wassersäulentest zeigt.

## Patentansprüche

1. Zusammensetzung, welche Wasser und mindestens eine Komponente A und mindestens eine Komponente B enthält,
wobei Komponente A entweder ein Polyurethan ist, das sich erhalten lässt durch Umsetzung eines zweiwertigen Isocyanats mit einem zweiwertigen Alkohol, welcher mindestens eine Perfluoralkylgruppe RF der Formel (I). 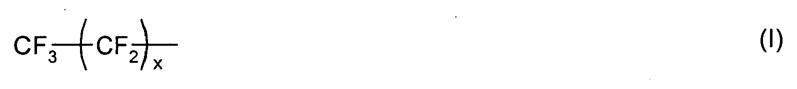 enthält, worin x eine Zahl von 5 bis 23, vorzugsweise von 7 bis 19 ist, wobei weder das zweiwertige Isocyanat noch der zweiwertige Alkohol Polyoxyalkylengruppen enthält, oder wobei Komponente A ein polymerer (Meth-)Acrylsäureester der Formel (II) ist, 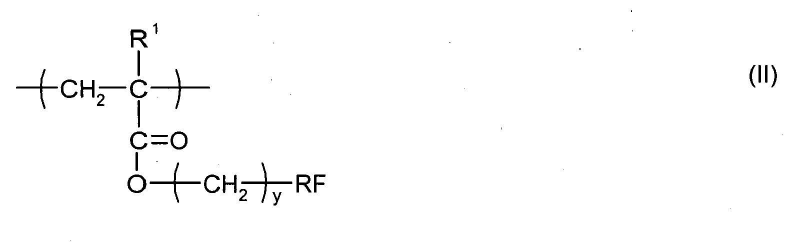 worin RF die oben genannte Bedeutung besitzt, R¹ für H oder CH₃ steht und y eine Zahl von 2 bis 4 ist, oder wobei Komponente A ein Gemisch ist, das eines oder mehrere der genannten Polyurethane und/oder einen oder mehrere der genannten (Meth-)Acrylsäureester enthält,
wobei Komponente B ein Siloxan der Formel (III) oder ein Gemisch solcher Siloxane ist 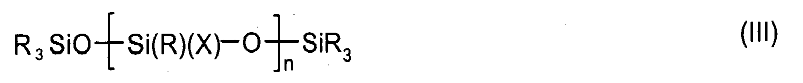 wobei alle Reste R unabhängig voneinander für CH₃-, CH₃CH₂- oder C₆H₅- stehen, n eine Zahl von 1 bis 5 ist,
alle Reste X unabhängig voneinander für R oder einen Rest der Formel (IV) stehen 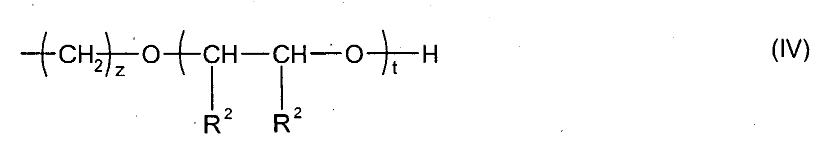 wobei jedoch mindestens einer aller Reste X für einen Rest der Formel (IV) steht, wobei in jeder der Einheiten 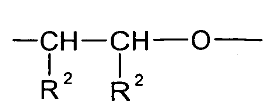 einer der Reste R² für Wasserstoff und der andere für Wasserstoff oder eine Methylgruppe steht, wobei z eine Zahl von 2 bis 4 ist und vorzugsweise den Wert 3 besitzt,
wobei t eine Zahl von 2 bis 12 ist, vorzugsweise eine Zahl von 6 bis 12,
wobei die Zusammensetzung 10 bis 70 Gew% an Komponente A enthält,
wobei das Gewichtsverhältnis von Komponente A zu Komponente B in der Zusammensetzung im Bereich von 100 : 5 bis 100 : 35 liegt, vorzugsweise im Bereich von 100 : 13 bis 100 : 25.

2. Zusammensetzung nach Anspruch 1, **dadurch gekennzeichnet, dass** Komponente B eine Verbindung der Formel (V) ist.

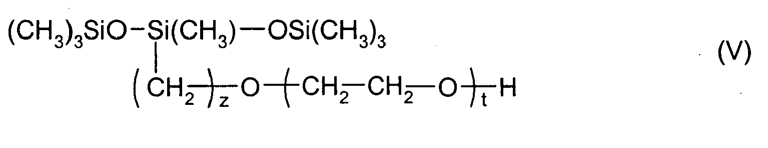

3. Zusammensetzung nach Anspruch 1 oder 2, **dadurch gekennzeichnet, dass** sie Wasser und Komponente A im Gewichtsverhältnis von 4 : 1 bis 6 : 1 enthält.

4. Verfahren zur Behandlung von Fasermaterialien, wobei man auf die Fasermaterialien eine Zusammensetzung gemäß einem der Ansprüche 1 bis 3 aufbringt.

5. Verfahren nach Anspruch 4, **dadurch gekennzeichnet, dass** die Fasermaterialien nonwovens (Vliese) sind.

6. Verfahren nach Anspruch 4 oder 5, **dadurch gekennzeichnet, dass** die Fasermaterialien zu 80 bis 100 Gew% aus Polyolefin, vorzugsweise aus Polypropylen, bestehen.

7. Verfahren nach einem oder mehreren der Ansprüche 4 bis 6, **dadurch gekennzeichnet, dass** die Zusammensetzung in Form eines Schaums auf die Fasermaterialien aufgebracht wird.

8. Verfahren nach einem oder mehreren der Ansprüche 4 bis 7, **dadurch gekennzeichnet, dass** die Zusammensetzung zusätzlich ein Antistatikum enthält.
